# FASCICULE DE BREVET EUROPEEN

(11) **EP 2 488 397 B1**
(45) Date de publication et mention de la délivrance du brevet: **23.04.2014**
(21) Numéro de dépôt: 10785468.9
(22) Date de dépôt: 13.10.2010
(51) Int. Cl.: B60T 13/58, B62L 3/02, B60L 7/18, B62M 6/45, B62L 3/00, B60T 8/17, B60T 13/00, B60T 15/36, B60T 17/04, B60W 10/08, B60W 10/18

(54) **VEHICULE MOTORISE POURVU D'UN DISPOSITIF DE CONTROLE DU FREINAGE.**
KRAFTFAHRZEUG MIT BREMSREGELVORRICHTUNG
MOTOR VEHICLE WITH BRAKE CONTROL DEVICE

(30) Priorité: 14.10.2009 FR 0957212
(43) Date de publication de la demande: 22.08.2012
(73) Titulaire: Giudice, Daniel, 06200 Nice (FR)
(72) Inventeur: Giudice, Daniel, 06200 Nice (FR)
(74) Mandataire: Novagraaf Technologies
(86) Numéro de dépôt international: PCT/FR2010/052172
(87) Numéro de publication internationale: WO 2011/045537

(56) Documents cités:
- EP-A1- 1 298 050
- FR-A1- 2 874 564
- US-A- 3 621 929

## Description

L'invention concerne le domaine des dispositifs de contrôle du freinage à monter sur un circuit hydraulique de freinage d'un véhicule motorisé à enfourcher.

De tels véhicules en eux-mêmes sont également concernés. Tel est le cas d'un véhicule à deux ou trois roues et/ou pourvu d'un guidon de direction et d'une selle, ce véhicule comprenant:
- au moins un moteur électrique de propulsion, adapté à fonctionner en génératrice, suite à une manoeuvre d'une manette de frein mobile sur une première course, manoeuvrable à partir d'une action d'un utilisateur, et reliée à au moins un frein à friction par un circuit hydraulique de freinage,
- des moyens accumulateur d'électricité reliés au moteur électrique, et,
- un dispositif de contrôle du freinage comprenant ladite manette de frein et des moyens de temporisation liés fonctionnellement à cette manette, au frein et au moteur électrique, comprenant un piston mobile dans un conduit et qui sont adaptés pour, quand l'utilisateur manoeuvre la manette de frein, retarder l'application au véhicule d'un freinage via le(s) frein(s) à friction, après une première période de fonctionnement du moteur électrique en génératrice. Un tel système est connu du document FR 2 874 564.

Un problème qui se pose concerne la commande du/des freins à commande hydraulique du véhicule.

Un autre problème concerne la commande du moteur électrique du véhicule pour qu'il fonctionne en génératrice, assurant ainsi un freinage régénératif/dynamique.

Un autre problème concerne la possible coordination de ces deux commandes.

Encore un autre problème concerne la conception d'une solution facile à monter/faire fonctionner sur de tels véhicules motorisés à enfourcher.

Encore un autre problème concerne la possibilité de concevoir une solution qui puisse être un kit adaptable sur un tronçon du circuit hydraulique de tels véhicules motorisés à enfourcher.

Encore un autre problème concerne la progressivité du freinage.

Encore autre problème concerne la manière de sécuriser la répétitivité des commandes, avec une solution aisée à mettre en oeuvre, fiable et peu onéreuse.

Pour résoudre une partie au moins de ces problèmes, il est conseillé que, dès la première course de manoeuvre de la manette de frein, le piston soit déplacé par action sur lui du fluide de freinage et à l'encontre d'un moyen de rappel, ce qui déclenche le fonctionnement du moteur électrique en génératrice, via un moyen capteur.

Il est aussi conseillé ce qui suit :
- le dispositif de contrôle du freinage est pourvu d'un circuit de retour hydraulique monté en dérivation entre une sortie et une entrée dudit conduit. Ainsi une sensation de résistance dans la manette de frein est assurée. La répétitivité est aussi favorisée ;
- monté sur un circuit de freinage et en liaison avec une seconde manoeuvre de la manette qui suit celle suivant la première course, le dispositif de contrôle du freinage assure un freinage via le(s) frein(s) à friction, de telle sorte que :
   * le piston, qui appartient à des moyens à soupape est, lors de la première course(C1), déplacé sous l'effet d'une circulation du fluide hydraulique dans ce circuit,
   * et le moyen capteur qu'il comprend est adapté à transformer la pression exercée par ce fluide en des données électriques.
   On assure ainsi la modularité du dispositif ;
- le piston :
   * lors de la première course (C1) et tant que la pression hydraulique qui le pousse est inférieure à un seuil (S2) prédéterminé, ferme une communication vers le frein de telle sorte qu'il n'y a pas de freinage via le(s) frein(s) à friction,
   * lors de la seconde manoeuvre (C2) et alors que la pression hydraulique exercée sur lui devient supérieure audit seuil, ouvre ladite communication de telle sorte qu'il y a alors un tel freinage.
   On peut ainsi tendre vers une possible progressivité du freinage ;
- dans le conduit et lors des première et seconde course et manoeuvre (C1,C2) de la manette, le piston se déplace par rapport à un orifice dans la paroi latérale du conduit, qu'il ouvre et ferme, en fonction de sa position de coulissement.

Même possibilité que ci-avant ;
- dans le conduit, le piston qui est à paroi frontale pleine se déplace par rapport à un orifice dans la paroi latérale du conduit qu'il ouvre en coulissant jusqu'à le dépasser frontalement, un débit de fuite vers cet orifice existant autour de la paroi latérale périphérique du piston, sur la portion située entre sa paroi frontale et un joint d'étanchéité quand ce joint est situé au-delà dudit orifice.

### Possibilité ci-avant réalisée.

Est également concerné un procédé pour réaliser et contrôler un freinage sur un véhicule motorisé du type ci-avant, comme revendiqué.

D'autres caractéristiques et avantages apparaitront de la description plus détaillée qui suit, laquelle est faite en référence à des figures où :
- la figure 1, représente un schéma fonctionnel global d'un véhicule type,
- la figure 2 est un schéma fonctionnel global du dispositif imaginé,
- les figures 3,4,5 montrent trois situations successives de fonctionnement du coeur du dispositif de contrôle du freinage quand celui-ci s'opère, en ne montrant que la liaison avec la poignée de frein,
- les figures 6,7,8,9 montrent également différentes situations de fonctionnement d'un autre mode de réalisation, de même pour la figure 10,
- la figure 11 montre une solution à débit de fuite favorable à un passage progressif au freinage mécanique,
- la figure 12 montre une possible évolution de la pression P en fonction du freinage sur la manette.

Sur les figures en coupe 3-10, les hachures ne sont pas systématiquement portées.

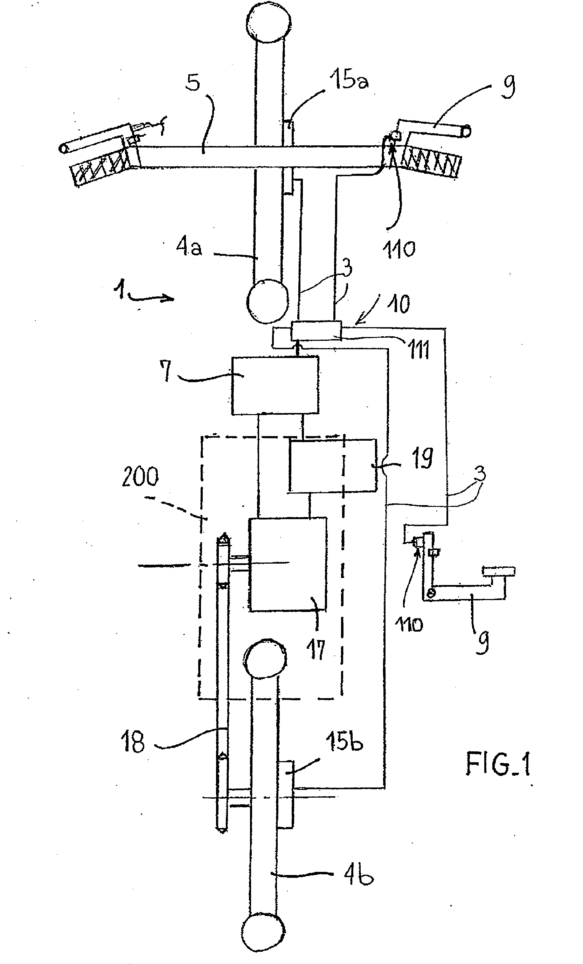

Figure 1, le véhicule motorisé à enfourcher 1 est pourvu d'un circuit de freinage 3.

Il comprend plusieurs roues, de préférence deux ou trois, respectivement avant 4a et arrière 4b pourvues de freins, respectivement 15a, 15b, ainsi qu'un guidon 5 et un calculateur de bord 7.

Un dispositif 10 de contrôle du freinage est également embarqué, à l'endroit de la portion 111 de conduit.

Il comprend, branchés successivement sur le circuit de freinage, une manette de frein 9 (poignée ou pédale), des moyens 11 de mise en pression hydraulique d'au moins une zone 13 du circuit et les freins 15a (avant) et 15b (arrière) à commande hydraulique.

De préférence, les moyens 11 seront adaptés à une mise en pression hydraulique. Ils comprendront un maître cylindre 110 adapté à transmettre une pression par l'intermédiaire d'un fluide hydraulique.

Le véhicule, typiquement un scooter, comprend également (au moins) un moteur électrique 17 de propulsion adapté à fonctionner en génératrice, suite à une manoeuvre de ladite poignée ou pédale de frein 9, et des moyens 19 embarqués accumulateurs d'électricité. Moteur électrique fonctionnant en moteur, ils l'aliment en énergie. En fonctionnement génératrice, ils sont chargés par ce moteur 17.

Une liaison 18, par exemple par chaîne, permet au moteur 17 de transmettre l'énergie d'entraînement à la roue concernée, ici 4b. D'autres transmissions sont possibles : courroie, variateur, moteur électrique dans la roue (moteur-roue)... etc. En 200 est schématisé le châssis du véhicule qui porte le tout.

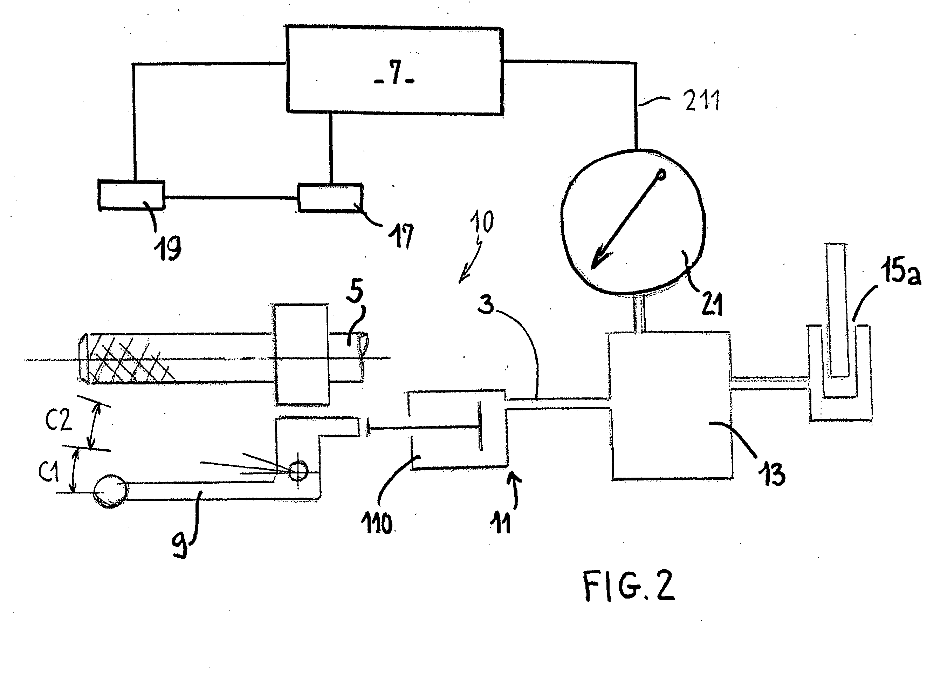

Figure 2, on voit un moyen capteur comprenant le capteur de pression 21 adapté à relever la pression dans la zone 13 et la transmettre au calculateur 7 (liaison 211). Cette zone 13 est pourvue de moyens à soupape 20 disposés en série sur le circuit 3.

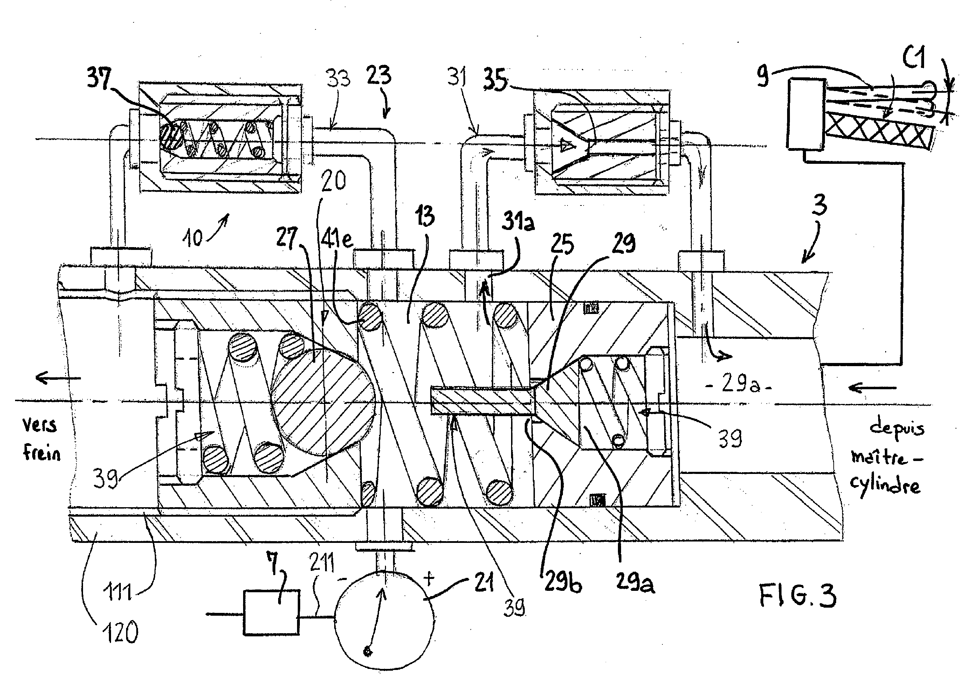

Pour favoriser une circulation retour du fluide hydraulique qui circule dans le circuit de freinage, en limitant la quantité nécessaire de ce fluide (typiquement de l'huile), un « circuit retour » 23 de ce fluide en direction des moyens de mise en pression 110 et monté localement en parallèle du circuit de freinage 3 est prévu, comme montré fig.3 et suivantes.

Figs.3-6, on voit qu'ouvertes, les vannes 27,29 permettent des communications fluides, respectivement en 271 et 291.

La pression relevée par le transducteur/capteur 21 dans la zone 13 va dépendre du déplacement du piston 25 et des conditions d'ouverture et de fermeture des vannes 27, 29 situées de part et d'autre d'elle.

Quant auxdites première et seconde vannes 29, 27, elles sont donc disposées successivement sur la partie du circuit de freinage allant du maître cylindre 110 au frein à commande hydraulique, tel 15a, avec la sortie de la première vanne et l'entrée de la seconde qui sont en communication fluide à l'endroit de ladite zone 13.

On peut en outre noter sur lesdites figures que le circuit 23 de retour de fluide hydraulique comprend, en dérivation du conduit 111, un premier tronçon 31 entre ladite zone/chambre de pression 13 et l'entrée 29a de la première vanne 29, et un second tronçon 33 entre la sortie 27b de la seconde vanne 27 et la zone 13.

Ces premier et second circuits 31, 33 sont ici respectivement pourvus d'une réduction de section 35 et d'une troisième vanne 37.

Ainsi, un retour fluide vers l'amont de la vanne 29 pourra être assuré à une pression adaptée, provoquant alors une sensation de résistance sur la manette 9.

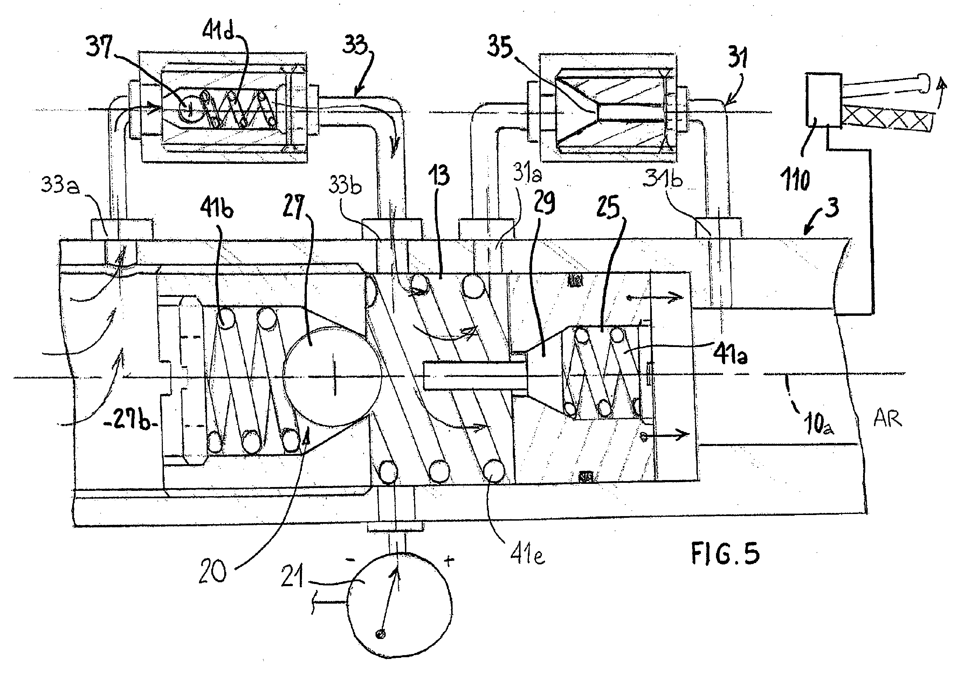

La troisième vanne 37 s'ouvre, elle, à une pression aval, en 27b, supérieure à la pression dans la zone/chambre 13, comme montré figure 5.

A priori, le retour de fluide hydraulique à travers la/les dérivation(s) 31/33 s'effectuera quand ni la première ni la seconde vannes 29, 27 ne seront ouvertes.

Sur les figures, on note encore que des moyens 39 d'ouverture et fermeture sélective, fonction de la pression transmise par le fluide hydraulique, équipent les vannes précitées. Ces déplacements s'opèrent parallèlement à l'axe 10a du conduit 111. Suivant cet axe, est disposée la chambre 13 et sont mobiles les vannes 27, 29 et le piston 25.

De ce qui précède, on aura compris que, pour réaliser et contrôler un freinage sur le circuit de freinage d'un véhicule motorisé du type précité, on conseille:
- de disposer successivement sur ce circuit de freinage, entre le maître cylindre et le (disque de) frein considéré, une première et une seconde vannes, telles 29, 27, en réservant entre elles une chambre de pression 13 remplie de fluide hydraulique,
- de mettre en place un capteur de pression 21 pour relever la pression hydraulique dans cette chambre et la transmettre au calculateur de bord 7 afin de faire fonctionner le moteur électrique 17 en génératrice si la pression transmise est supérieure à un seuil prédéterminé (S1),
- de mettre en place des moyens 39 d'ouverture et de fermeture sélective des vannes, suivant la pression transmise par le fluide hydraulique, ainsi que des moyens 11, 110 de mise en pression de la chambre 13, sans ouverture desdites première et seconde vannes tant que la pression hydraulique en entrée de la première vanne 29 ne dépasse pas un seuil limite prédéterminé (S2),
   de sorte que :
   - suite à un écrasement de la poignée ou pédale de frein 9 sur une première partie c1 de sa course, on créera, via lesdits moyens de mise en pression, une augmentation de la pression hydraulique en entrée de la première vanne 29 et dans la chambre de pression 13 telle que le moteur électrique 7 fonctionne alors en génératrice, sans toutefois ouverture des première et seconde vannes, et donc sans actionnement du (disque de) frein 15,
   - puis, suite à une continuation d'écrasement de la poignée ou pédale de frein sur une seconde partie C2 de sa course, on dépassera ledit seuil limite S2, réalisant alors une ouverture desdites première et seconde vannes et donc freinage du/des (disque de) frein considéré(s).

Figure 3, uniquement tout ou partie de la course C1 est enfoncée. La pression monte à l'entrée 29a. Le piston 25 avance à l'encontre de 41e, sans toutefois obturer l'entrée 31a du circuit 31. Les vannes 27, 29, 37 sont fermées. La pression augmente dans la chambre 13, ce qui est détecté par le capteur 21 qui traduit cela en données (ou signaux) électriques envoyées dans le calculateur de bord 7. Ce dernier engage alors le freinage régénératif, c'est-à-dire que le moteur électrique 17 fonctionne en génératrice et charge les moyens accumulateurs d'électricité, ici la batterie 19. Pour autant le freinage mécanique n'est pas encore actionné (effet retard).

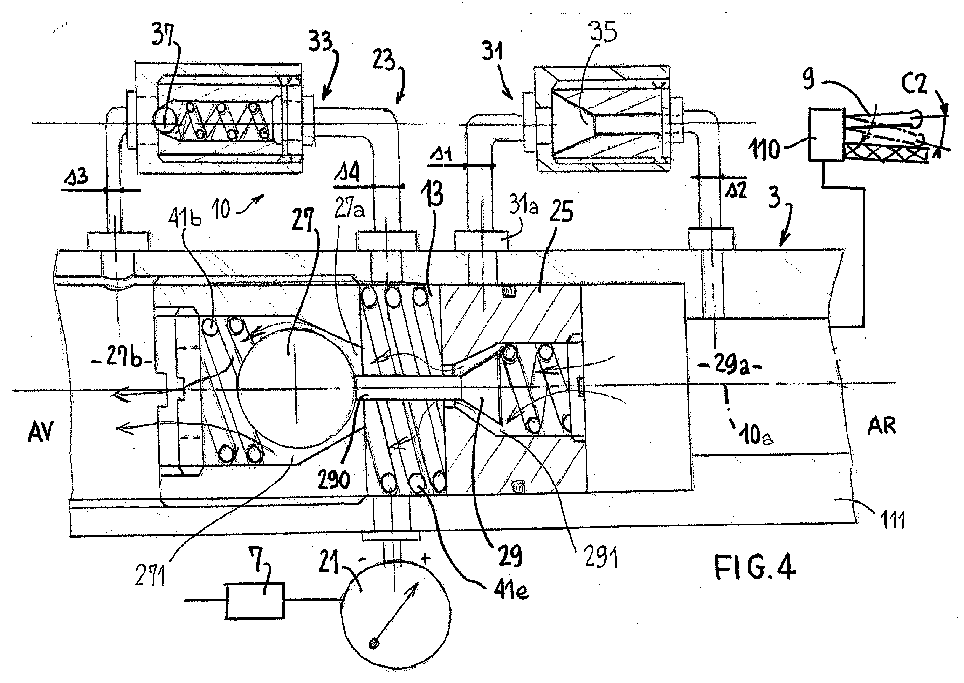

Figure 4, on a atteint la course C2. La pression à l'entrée 29a a monté. Le piston 25 ayant encore avancé, il obture maintenant l'accès 31a.

Via son excroissance 290, il vient en outre pousser axialement la vanne anti-retour 27 pour l'ouvrir.

Par l'effet de réaction provoqué par la compression du moyen de rappel 41b, ceci provoque en outre l'ouverture (vers l'arrière) de la vanne 29, ce qui permet que le fluide hydraulique atteigne le(s) frein(s) concerné(s). C'est le freinage mécanique.

Figure 5, le conducteur a relâché la poignée de frein. Les vannes 27/25 sont fermées. Le fluide hydraulique revient dans la chambre 13 par la dérivation 33. La vanne 37 est ouverte. Le piston 25 repart axialement vers l'arrière (AR), à l'encontre du moyen de rappel 41a. Au repos, le piston est comme figure 3 et les vannes 27,29,37 sont fermées.

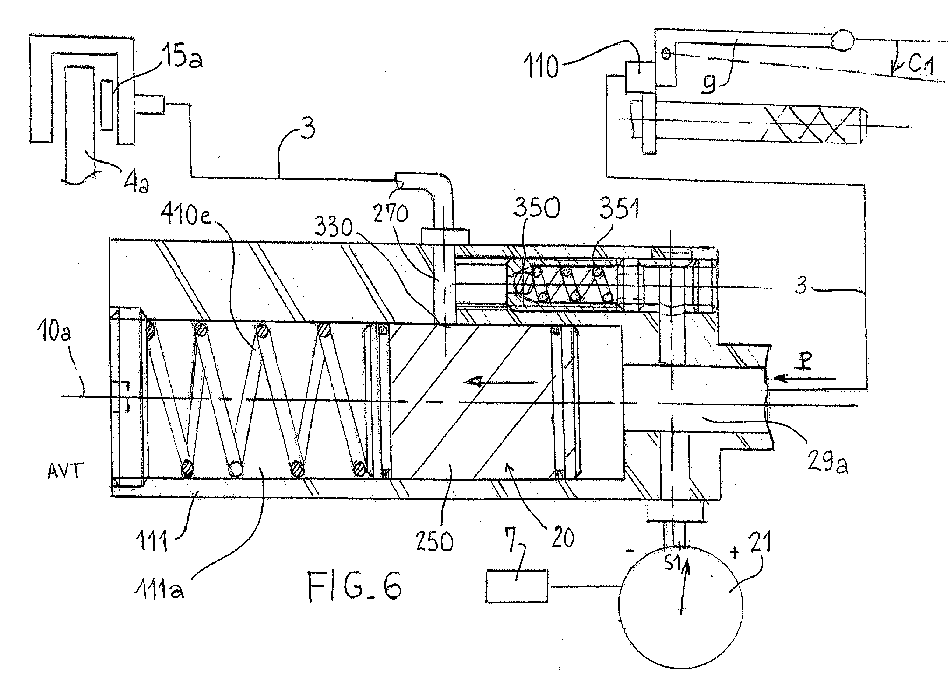

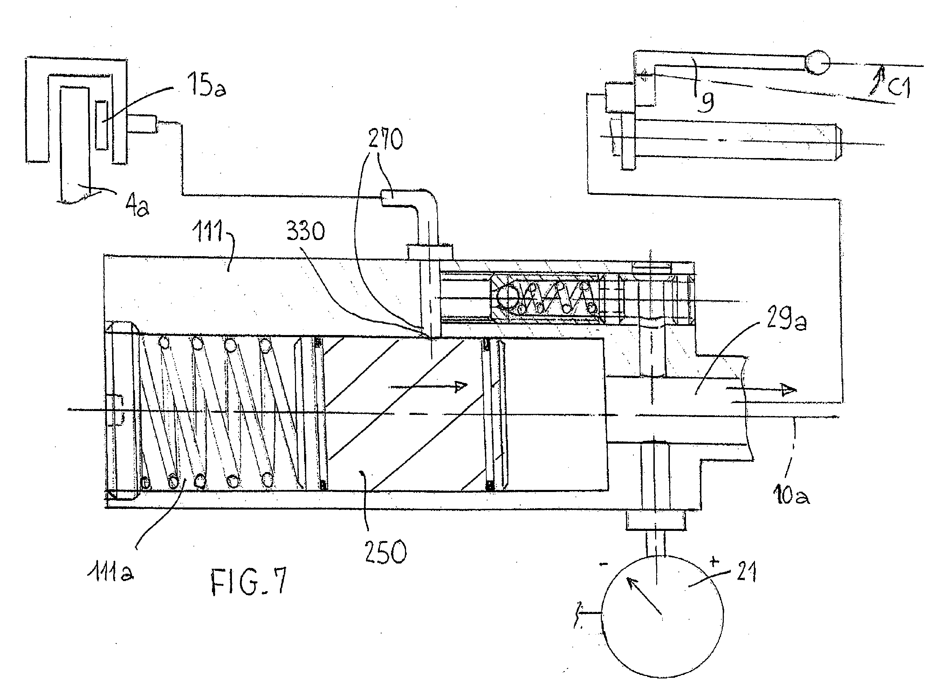

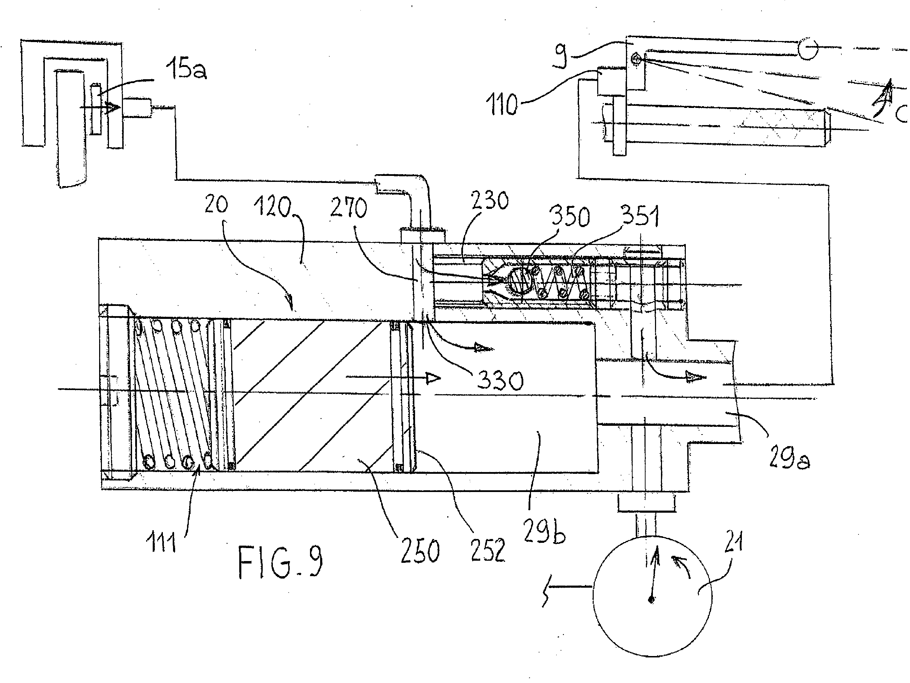

Figures 6-9, les moyens 20 à soupape comprennent un piston 250 coulissant dans une chambre 111a du conduit 111, lequel peut être (comme dans la version précédente) un tronçon rapporté, branché en entrée (29a) et en sortie (270) sur le circuit de freinage 3, donc en série. Le piston 250 est monté de manière à agir à l'encontre du moyen de rappel 410e (ici un ressort) quand il coulisse vers l'avant (AVT), sous l'effet de la manoeuvre (d'écrasement) de la manette de frein, dans le sens d'une ouverture de la communication 330 (voir flèche fig.6). Cette communication existe ici sous la forme d'un orifice dans la paroi latérale du conduit (chambre 111a).

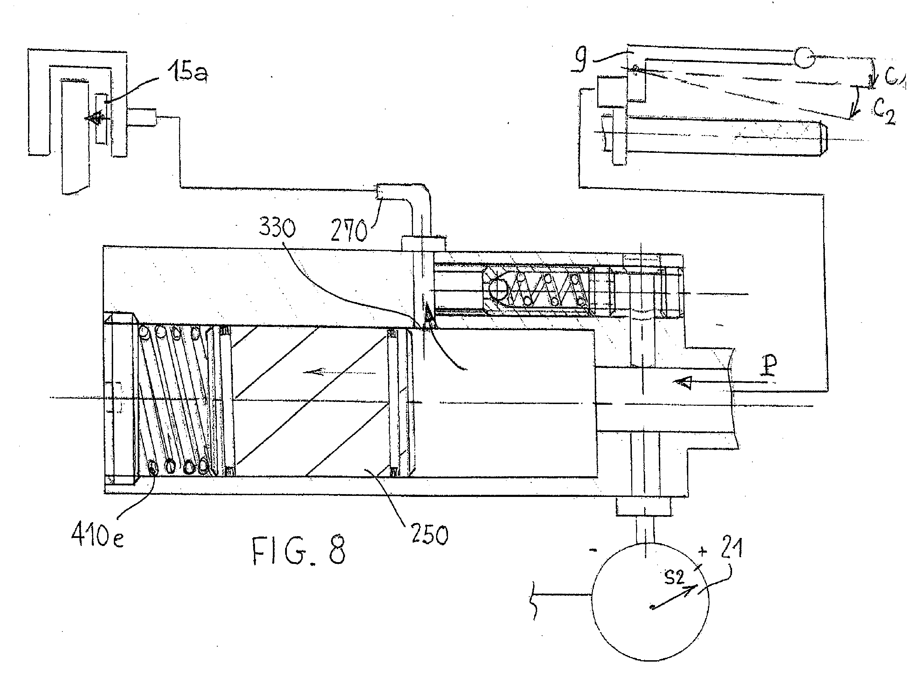

Ce piston est sensible à la pression d'entrée générée via la course de la manette 9 et ferme (au moins essentiellement) la communication 330 vers la sortie 270 tant que la pression d'entrée est inférieure au seuil S2 (voir figs.6-7). Par contre, il l'ouvre (en dépassant l'orifice) si la pression d'entrée devient supérieure à ce seuil (fig.8). Le moyen 410e est alors comprimé au maximum. La manette 9 est dans sa seconde partie de course C2. Le frein concerné (15a ici) se serre.

Notamment pendant la course C1, le transducteur/capteur 21 a en outre capté la pression hydraulique P transmise dans le conduit et a transformé cette pression en des données électriques adressées au calculateur 7, de manière qu'au seuil S1 le freinage régénératif soit enclenché.

Si la course C2 est engagée, on suppose qu'il pourrait y avoir des cas où le coulissement retour (flèche fig.6) du piston 250 rende incertain le retour de fluide hydraulique vers l'entrée 29a à travers la communication 330 et l'espace 29b d'entrée du conduit 111. Aussi est-il conseillé de prévoir, dans le corps 120 du conduit, un circuit de retour 230 entre la sortie 270 et l'entrée 29a, monté en dérivation des moyens 20/250 à soupape. Le circuit 230 comprend une soupape 350 s'ouvrant vers l'entrée 29a, à l'encontre d'un moyen de rappel 351, quand la manette 9 est relâchée, après avoir été manoeuvrée au-delà de la première partie (C1) de sa course de freinage.

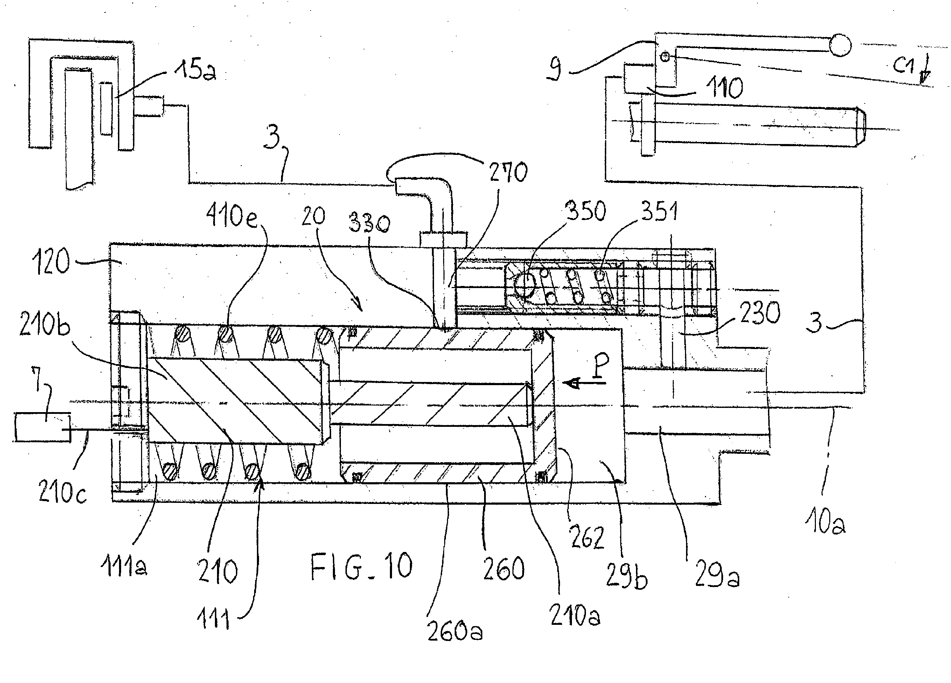

Figure 10, on trouve la version a priori la plus aboutie qui reprend celle des figs.6-9, sauf le piston plein 250 qui est remplacé par celui 260 monté de manière à agir physiquement, lors de ses coulissements, sur (ou interagir avec) le moyen capteur 210 qui comprend ici un potentiomètre.

Ce capteur, monté avec le piston dans la chambre 111a du conduit 111, comprend une tige 210a coulissant parallèlement à l'axe 10a de coulissement du piston. Ce piston peut être creux, de manière à ouvrir et fermer l'orifice latéral 330 comme ci-avant, via sa paroi latérale périphérique 260a. Le potentiomètre 210, ici donc du type linéaire, est fixe dans le conduit et relié au calculateur 7. C'est donc grâce au piston 260 qu'on pourra faire agir la pression hydraulique sur un tel moyen capteur 210, afin de générer son mouvement. D'autres types de potentiomètre pourraient être utilisés (rotatifs...).

Si la manette 9 est manoeuvrée en freinage (fig.10), la pression pousse le piston 260 à l'encontre du moyen de rappel 410e, lequel entoure le corps 210b fixe du potentiomètre 210, dans la chambre 111a.

La tige 210a est alors déplacée. L'importance du signal électrique envoyé au calculateur est fonction de l'ampleur de son déplacement. Ainsi, la valeur d'écrasement de la tige 210a correspondant à une valeur électrique, celle-ci est envoyée au calculateur, via la liaison 210c. Le calculateur 7 commande le freinage régénératif (fonctionnement du/des moteur(s) électrique(s), tel 7, en générateur) en fonction dudit signal qu'il reçoit, donc du mouvement subi par le potentiomètre.

Par conséquent, si la pression P devient supérieure au seuil S1, le moteur électrique 17 fonctionnera en génératrice, suite à la commande induite par les données (signaux) issues du moyen capteur 210. Et le moyen à soupape 260 fermera la communication 330 de l'entrée 29b vers la sortie 330 tant que la pression d'entrée P demeurera inférieure au seuil S2 (S1<S2), en ouvrant par contre cette communication si ladite pression devient supérieure à ce seuil. De façon complémentaire, si la pression devient supérieure au second seuil S2, la communication 330 s'ouvrira pour déclencher le freinage du frein mécanique concerné, tel 15a.

On aura compris qu'un point commun entre les figs.6-10 est que la communication entre l'amont et l'aval des moyens à soupape passe par un orifice 270,330 dans la paroi latérale du conduit et que le piston 250,260 présente une paroi frontale pleine (251,261) qui, pour ouvrir cet orifice, peut coulisser jusqu'à dépasser frontalement l'orifice.

Pour une progressivité et/ou un contrôle accru du freinage, il peut être utile de créer un débit de fuite 300 vers cet orifice, autour de la paroi latérale périphérique (pleine) 250a,260a du piston et sur la portion 252,262 située entre la paroi frontale 251,261 et le joint d'étanchéité 280 quand celui-ci est situé au-delà dudit orifice, sans que la paroi frontale le soit, vers la fin de la course C1.

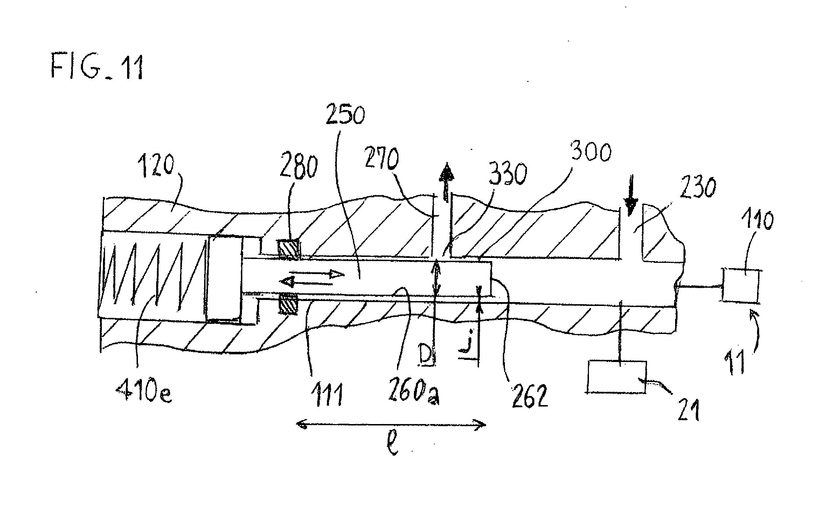

Ainsi, un jeu j de quelques centièmes de mm, typiquement 2 à 10/100mm, entre la paroi latérale 260a du piston et celle du conduit 111, ceci pour un diamètre de piston de 4 à 10mm, sur une longueur 1 de l'ordre de 5 à 20mm doit convenir, pour un scooter; voir fig.11 où, pour le reste, tout est identique à la solution des figs.6-10. (Au moins) sur la longueur du jeu, le diamètre D du piston est constant. De préférence, le joint 280 sera fixe ; il est ici porté par le corps 120. En 330 et 270, on retrouve les orifice et sortie vers le(s) frein(s) hydraulique(s), en 230 la dérivation (pourvu de sa soupape non représentée) pour le retour de fluide hydraulique et en 21 le capteur de pression (la solution 210 pourrait être utilisée). Sous l'effet de la manoeuvre de la manette de frein par l'utilisateur souhaitant freiner, le fluide hydraulique déplacé par les moyens de pression 11,110 vient, dès la course C1 précité, pousser le piston 250 à l'encontre de la force de rappel du moyen de rappel 410e.

On aura également noté qu'avec les solutions des figs.6-11, les préférées, il n'y aura a priori pas de pression supplémentaire ressentie sur la manette 9 pendant la course C2, à partir du moment où la communication 330 est ouverte, puisqu'alors le fluide hydraulique peut s'échapper vers le frein concerné. Ceci permet une stabilité de sensation de freinage pour l'utilisateur tout au long des deux courses C1,C2.

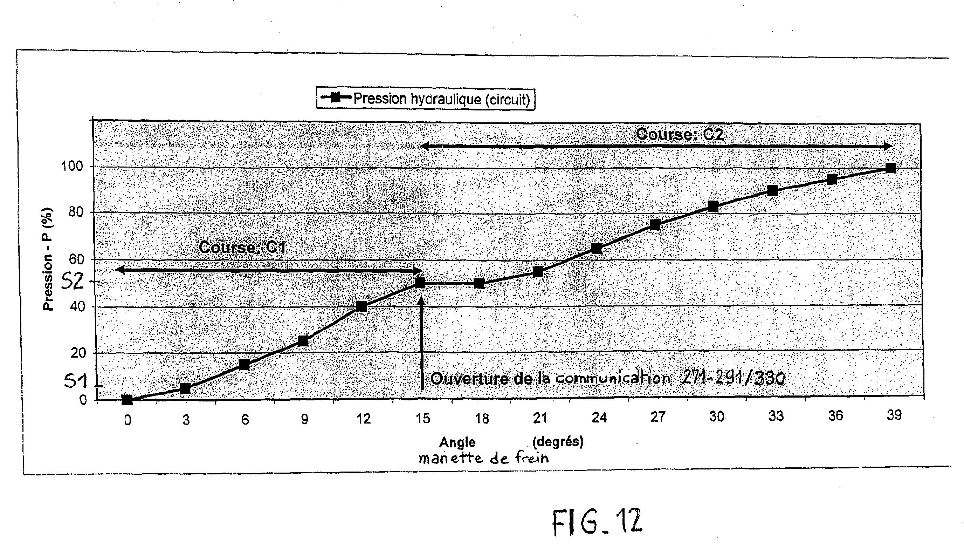

Figure 12, on voit une possible évolution de la pression P en fonction du freinage sur la manette 9, les seuils S1,S2, les courses C1,C2 et le moment de l'ouverture de la communication en 271-291 ou 330.

De ce qui précède et des illustrations, on aura compris que les moyens de rappel 41e,410e participent à ce que l'utilisateur ressente une résistance lors de la manoeuvre de la manette de frein, puisqu'ils repoussent alors le piston concerné vers l'entrée du circuit (moyens de pression 11,110).

Par ailleurs, soupape 350 ouverte les dérivations 23,230 sécurisent le retour de fluide hydraulique à l'issue de la course C2 en évitant que les freins concernés demeurent serrés lorsqu'on relâche la manette de frein.

Tant le capteur de pression 21 que l'ensemble comprenant le potentiomètre 210 et le piston 260 définissent un transducteur de pression. En effet, ils fournissent un signal électrique (typiquement un signal de tension) à partir d'une pression appliquée sur eux. D'ailleurs, l'ensemble 210+260 pourront être d'une seule pièce. On peut donc considérer que les moyens de temporisation comprennent un transducteur de pression.

## Revendications

1. Véhicule à deux ou trois roues et/ou pourvu d'un guidon (5) de direction et d'une selle, ce véhicule comprenant:
- au moins un moteur électrique de propulsion (17), adapté à fonctionner en génératrice, suite à une manoeuvre d'une manette de frein mobile sur une première course, manoeuvrable à partir d'une action d'un utilisateur, et reliée à au moins un frein à friction (15a,15b) par un circuit hydraulique de freinage (3),
- des moyens (19) accumulateur d'électricité reliés au moteur électrique, et,
- un dispositif de contrôle du freinage comprenant ladite manette de frein (9) et des moyens de temporisation (20,25,27,29,250,21,210,260) liés fonctionnellement à cette manette, au frein et au moteur électrique, **caractérisé en ce qu'**il comprend un piston (250,260) mobile dans un conduit (111) et les dits moyens de temporisation sont adaptés pour, quand l'utilisateur manoeuvre la manette de frein, retarder l'application au véhicule d'un freinage via le(s) frein(s) à friction, après une première période de fonctionnement du moteur électrique en génératrice,
dès la première course (C1) de manoeuvre de la manette de frein, le piston est déplacé par action sur lui du fluide de freinage et à l'encontre d'un moyen de rappel (41e), ce qui déclenche le fonctionnement du moteur électrique (17) en génératrice, via un moyen capteur (21,210).

2. Véhicule selon la revendication 1, **caractérisé en ce que** le dispositif (10) de contrôle du freinage est pourvu d'un circuit de retour hydraulique (23, 230, 31, 33) monté en dérivation entre une sortie (27b,270) et une entrée (29a,29b) dudit conduit (111).

3. Dispositif de contrôle du freinage pour un véhicule selon l'une des revendications précédentes et qui, monté sur un circuit de freinage (3) et en liaison avec une seconde manoeuvre (C2) de la manette qui suit celle suivant la première course (C1), assure un freinage via le(s) frein(s) à friction, **caractérisé en ce que** :
- le piston, qui appartient à des moyens (20,25,27,29,250,260) à soupape est, lors de la première course (C1), déplacé sous l'effet d'une circulation du fluide hydraulique dans ce circuit,
- et le moyen capteur (21,210) qu'il comprend est adapté à transformer la pression exercée par ce fluide en des données électriques.

4. Dispositif selon la revendication 3, **caractérisé en ce que** le piston :
- lors de la première course (C1) et tant que la pression hydraulique qui le pousse est inférieure à un seuil (S2) prédéterminé, ferme une communication (271,291,330) vers le frein de telle sorte qu'il n'y a pas de freinage via le(s) frein(s) à friction,
- lors de la seconde manoeuvre (C2) et alors que la pression hydraulique exercée sur lui devient supérieure audit seuil (S2), ouvre ladite communication de telle sorte qu'il y a alors un tel freinage.

5. Dispositif selon la revendication 3 ou 4,
**caractérisé en ce que**, dans le conduit (111) et lors des première et seconde course et manoeuvre (C1,C2) de la manette, le piston se déplace par rapport à un orifice (270,330) dans la paroi latérale du conduit, qu'il ouvre et ferme, en fonction de sa position de coulissement.

6. Dispositif selon l'une des revendications 3 à 5, **caractérisé en ce que**, dans le conduit (111), le piston qui est à paroi frontale pleine (251,261) se déplace par rapport à un orifice (270,330) dans la paroi latérale du conduit qu'il ouvre en coulissant jusqu'à le dépasser frontalement, un débit de fuite vers cet orifice existant autour de la paroi latérale périphérique du piston, sur la portion (252,262) située entre sa paroi frontale et un joint d'étanchéité (280) quand ce joint est situé au-delà dudit orifice.

7. Dispositif selon l'une des revendications 3 à 6, **caractérisé en ce que** le moyen capteur comprend un capteur de pression (21) disposé dans le conduit (111) et adapté pour transmettre une pression qu'il y a relevé.

8. Procédé pour réaliser et contrôler le freinage sur un circuit de freinage (3) de véhicule selon la revendication 1 ou 2, et/ou le dispositif (10) de contrôle du freinage selon l'une des revendications 3 à 7, monté sur un tel véhicule comprenant un calculateur de bord (7), un moteur électrique (17) de propulsion adapté à fonctionner en génératrice, suite à une manoeuvre de ladite manette de frein (9), des moyens (19) embarqués accumulateurs d'électricité adaptés à être chargés par le moteur électrique (17) fonctionnant en génératrice, l'entrée des moyens à soupape (20,25,27,29,250,260) étant en communication fluide avec les moyens (11, 110) de mise en pression, la sortie (27b,270) étant reliée au frein (15a,15b), et le moyen capteur (21,210) au calculateur de bord (7),
dans lequel procédé :
- on transforme la pression d'entrée en lesdites données électriques transmises au calculateur (7),
- et :
• si ladite pression est supérieure à un premier seuil (S1) prédéterminé, on déplace le piston par la pression du fluide hydraulique en circulation et on fait fonctionner le moteur électrique (17) en génératrice,
• si ladite pression est supérieure à un second seuil (S2) lui-même supérieur au premier seuil (S1), on continue par ladite pression du fluide hydraulique à déplacer le piston jusqu'à ouvrir ladite communication entre l'entrée (29a,29b) et la sortie (27b,270) de manière à déclencher le freinage du frein (15a,15b).

## Patentansprüche

1. Fahrzeug mit zwei oder drei Rädern und/oder versehen mit einem Richtungslenker (5) und einem Sattel, wobei dieses Fahrzeug Folgendes umfasst:
- mindestens einen elektrischen Antriebsmotor (17), der ausgelegt ist, um als Generator zu funktionieren, in Antwort auf eine Bedienung eines beweglichen Bremshebels auf einem ersten Weg, der durch eine Betätigung eines Benutzers bedient werden kann, und verbunden mit mindestens einer Reibungsbremse (15a, 15b) durch einen hydraulischen Bremskreislauf (3),
- Mittel (19) zur Speicherung von Elektrizität, die mit dem elektrischen Motor verbunden sind, und
- eine Vorrichtung zur Steuerung der Bremsung, umfassend den Bremshebel (9) und Verzögerungsmittel (20, 25, 27, 29, 250, 21, 210, 260), die funktionell mit diesem Hebel, mit der Bremse und mit dem elektrischen Motor verbunden sind, **dadurch gekennzeichnet, dass** es einen beweglichen Kolben (250, 260) in einer Leitung (111) umfasst, und die Verzögerungsmittel ausgelegt sind, um wenn der Benutzer den Bremshebel bedient, die Anwendung einer Bremsung über die Reibungsbremse(n) auf das Fahrzeug, nach einem ersten Zeitraum des Betriebs des elektrischen Motors als Generator zu verzögern,
ab dem ersten Weg (C1) der Bedienung des Bremshebels der Kolben durch die Einwirkung auf ihn der Bremsflüssigkeit und entgegen einem Rückholmittel (41e) verschoben wird, wodurch der Betrieb des elektrischen Motors (17) als Generator über ein Sensormittel (21, 210) ausgelöst wird.

2. Verfahren nach Anspruch 1, **dadurch gekennzeichnet, dass** die Vorrichtung (10) zur Steuerung der Bremsung mit einem hydraulischen Rückleitung (23, 230, 31, 33) ausgestattet ist, die in Umleitung zwischen einem Ausgang (27b, 270) und einem Eingang (29a, 29b) der Leitung (111) montiert ist.

3. Vorrichtung zur Steuerung der Bremsung für ein Fahrzeug nach einem der vorhergehenden Ansprüche, und die, montiert auf einem Bremskreislauf (3)und in Verbindung mit einer zweiten Bedienung (C2) des Hebels, die derjenigen gemäß dem ersten Weg (C1) folgt, eine Bremsung über die Reibungsbremse(n) sicherstellt, **dadurch gekennzeichnet, dass**:
- der Kolben, der zu Ventilmitteln (20, 25, 27, 29, 250, 260) gehört, während des ersten Wegs (C1) unter der Einwirkung einer Zirkulierung der hydraulischen Flüssigkeit in diesem Kreislauf verschoben wird,
- und das Sensormittel (21, 210), das sie umfasst, ausgelegt ist, um den Druck, der von dieser Flüssigkeit ausgeübt wird, in elektrischen Daten umzuwandeln.

4. Vorrichtung nach Anspruch 3, **dadurch gekennzeichnet, dass** der Kolben:
- während des ersten Wegs (C1) solange der hydraulische Druck, der ihn antreibt, unter einer vorbestimmen Schwelle (S2) liegt, eine Verbindung (271, 291, 330) zur Bremse derart schließt, dass keine Bremsung über die Reibungsbremse(n) stattfindet,
- während der zweiten Bedienung (C2),und während der hydraulische Druck, der auf ihn ausgeübt wird, größer als die Schwelle (S2) wird, die Verbindung derart öffnet, dass dann eine derartige Bremsung stattfindet.

5. Vorrichtung nach Anspruch 3 oder 4, **dadurch gekennzeichnet, dass** sich in der Leitung (111) und während des/der ersten und zweiten Wegs und Bedienung (C1, C2) des Hebels der Kolben mit Bezug auf eine Öffnung (270, 330) in der seitlichen Wand des Leitung verschiebt, die er öffnet und schließt, je nach seiner Gleitposition.

6. Vorrichtung nach einem der Ansprüche 3 bis 5, **dadurch gekennzeichnet, dass**, sich in der Leitung (111) der Kolben, der eine vollständige Stirnwand (251, 261) aufweist, mit Bezug auf eine Öffnung (270, 330) in der seitlichen Wand des Leitung verschiebt, die er öffnet, indem er gleitet, bis er frontal über sie hinausragt, wobei ein Leckdurchsatz hin zu dieser Öffnung um die periphere seitliche Wand des Kolbens vorhanden ist, auf dem Abschnitt (252, 262), der sich zwischen seiner vorderen Wand und einer Dichtung (280) befindet, wenn sich diese Dichtung jenseits der Öffnung befindet.

7. Vorrichtung nach einem der Ansprüche 3 bis 6, **dadurch gekennzeichnet, dass** das Sensormittel einen Drucksensor (21) umfasst, der in der Leitung (111) angeordnet und ausgelegt ist, um einen Druck, den er dort abgelesen hat, zu übertragen.

8. Verfahren zur Durchführung und zur Steuerung der Bremsung auf einem Bremskreislauf (3) eines Fahrzeugs nach Anspruch 1 oder 2, und/oder Vorrichtung (10) zur Steuerung der Bremsung nach einem der Ansprüche 3 bis 7, montiert auf einem derartigen Fahrzeug, das einen Bordcomputer (7) umfasst, einen elektrischen Antriebsmotor (17), der ausgelegt ist, um als Generator zu funktionieren, in Antwort auf eine Bedienung des Bremshebels (9), Bordmittel (19) zur Speicherung von Elektrizität, die ausgelegt sind, um durch den elektrischen Motors (17), der als Generator funktioniert, geladen zu werden, wobei der Eingang der Ventilmittel (20, 25, 27, 29, 250, 260) in fluidischer Verbindung mit den Mitteln (11, 110) zur Unterdrucksetzung verbunden ist, wobei der Ausgang (27b, 270) mit der Bremse (15a, 15b) verbunden ist, und das Sensormittel (21, 210) mit dem Bordcomputer (7) verbunden ist,
wobei in diesem Prozess:
- der Eingangsdruck in die elektrischen Daten umgewandelt wird, die an den Computer (7) übertragen werden,
- und:
- wenn der Druck über einer ersten vorbestimmten Schwelle (S1) liegt, der Kolben durch den Druck der zirkulierenden hydraulischen Flüssigkeit verschoben wird und der elektrische Motor (17) als Generator betrieben wird,
- wenn der Druck über einer zweiten vorbestimmten Schwelle (S2) liegt, die selbst höher als die erste Schwelle (S1) ist, durch den Druck der hydraulischen Flüssigkeit weiterhin der Kolben verschoben wird, bis die Verbindung zwischen dem Eingang (29a, 29b) und dem Ausgang (27b, 270) derart geöffnet wird, dass die Betätigung der Bremse (15a, 15b) ausgelöst wird.

## Claims

1. Vehicle with two or three wheels and/or provided with handlebars (5) for steering and with a seat, this vehicle comprising:
- at least one electric propulsion engine (17), adapted to operate as a generator, following a manoeuvre of a brake lever mobile over a first course of travel, which can be manoeuvred by an action of a user, and connected to at least one friction brake (15a, 15b) by a hydraulic braking system (3),
- means for accumulating electricity (19) connected to the electric engine, and,
- a device for controlling the braking comprising said brake lever (9) and timing means (20, 25, 27, 29, 250, 21, 210, 260) linked operationally to this lever, to the brake and to the electric engine, **characterised in that** it comprises a piston (250, 260) mobile in a duct (111) and said timing means are adapted to, when the user manoeuvres the brake lever, delay the application to the vehicle of a braking via the friction brake(s), after a first period of operation of the electric generator engine,
as soon as the first course of travel (C1) of the manoeuvre of the brake lever, the piston is displaced by action on it of the brake fluid and when encountering a means of recalling (41e), which triggers the operation of the electric engine (17) as a generator, via a means for sensing (21, 210).

2. Vehicle according to claim 1, **characterised in that** the device (10) for controlling the braking is provided with a hydraulic return system (23, 230, 31, 33) mounted as a bypass between an output (27b, 270) and an input (29a, 29b) of said duct (111).

3. Device for controlling the braking for a vehicle according to one of the preceding claims and which, mounted on a braking system (3) and in liaison with a second manoeuvre (C2) of the lever which follows that following the first course of travel (C1), provides a braking via the friction brake(s), **characterised in that**:
- the piston, which belongs to the valve means (20, 25, 27, 29, 250, 260) is, during the first course of travel (C1), displaced under the effect of a circulation of the hydraulic fluid in this system,
- and the means for sensing (21, 210) that it comprises is adapted to transform the pressure exerted by this fluid into electrical data.

4. Device according to claim 3, **characterised in that** the piston:
- during the first course of travel (C1) and as long as the hydraulic pressure that is pushing it is less than a predetermined threshold (S2), closes a communication (271, 291, 330) to the brake in such a way that there is no braking via the friction brake(s),
- during the second manoeuvre (C2) and when the hydraulic pressure exerted on it becomes higher than said threshold (S2), opens said communication in such a way that there is then such a braking.

5. Device according to claim 3 or 4, **characterised in that**, in the duct (111) and during the first and second courses of travel and manoeuvring (C1, C2) of the lever, the piston is displaced in relation to an orifice (270, 330) in the lateral wall of the duct, that it opens and closes, according to its sliding position.

6. Device according to one of claims 3 to 5, **characterised in that**, in the duct (111), the piston which is with a solid front wall (251, 261) is displaced in relation to an orifice (270, 330) in the lateral wall of the duct that it opens by sliding until exceeding it at the front, with a leakage rate towards this orifice existing around the peripheral lateral wall of the piston, on the portion (252, 262) located between its front wall and a seal (280) when this seal is located beyond said orifice.

7. Device according to one of claims 3 to 6, **characterised in that** the means for sensing comprises a pressure sensor (21) arranged in the duct (111) and adapted to transmit a pressure that it has measured therein.

8. Method for carrying out and controlling the braking on a braking system (3) of a vehicle according to claim 1 or 2, and/or the device (10) for controlling the braking according to one of claims 3 to 7, mounted on such a vehicle comprising a dashboard computer (7), an electric propulsion engine (17) adapted to operate as a generator, following a manoeuvre of said brake lever (9), with onboard means for accumulating electricity (19) adapted to be charged by the electric engine (17) operating as a generator, with the input of the valve means (20, 25, 27, 29, 250, 260) in fluidic communication with the means (11, 110) for pressurising, with the output (27b, 270) being connected to the brake (15a, 15b), and the means for sensing (21, 210) to the dashboard computer (7),
in which method:
- the input pressure is transformed into said electrical data transmitted to the computer (7),
- and:
- - if said pressure is higher than a first predetermined threshold (S1), the piston is displaced by the pressure of the hydraulic fluid in circulation and the electric engine (17) is operated as a generator,
- - if said pressure is higher than a second threshold (S2) itself higher than the first threshold (S1), the displacement of the piston by said pressure of the hydraulic fluid is continued until the opening of said communication between the input (29a, 29b) and the output (27b, 270) in such a way as to trigger the braking of the brake (15a, 15b).
